# EUROPEAN PATENT APPLICATION

(11) **EP 1 415 542 A1**
(43) Date of publication of application: **06.05.2004**
(21) Application number: 03078443.3
(22) Date of filing: 03.11.2003
(51) Int. Cl.: A23G 9/02

(54) **Ice-cream dessert material and method for the preparation thereof**

(30) Priority: 04.11.2002 NL 1021834
(71) Applicant: Campina B.V., 5301 LB Zaltbommel (NL)
(72) Inventor: van de Ven, Martinus Johannes Maria, 3217 SP Montfoort (NL)
(74) Representative: Barendregt, Frank, Drs.

(57) **Abstract**

The invention describes an ice-cream dessert material which can be stored in the liquid state under refrigerator conditions for at least 15 days and which the consumer can convert into an ice-cream dessert by freezing.

The ice-cream dessert material contains a selection of stabilizers which allow whipping to an overrun of 150-350% so as to form a foam with a gas bubble size D 3.2 < 25 µm which is stable over the course of time. The ice-cream dessert is a product which can be scooped as soon as it has been removed from the freezer.

The invention also describes a method for preparing the ice-cream dessert material.

## Description

The invention relates firstly to an ice-cream dessert material which is in liquid form, is stable during storage and has an oil-in-water emulsion character, comprising water, milk protein, fat, flavourings and sweeteners, as well as one or more stabilizers, which can be converted by freezing into an ice-cream dessert which comprises microcrystals.

An ice-cream dessert material of this type is known, in terms of its composition, from EP-A 1 072 196. The said publication describes a material of the type described in the preamble which, after it has been frozen, has to be stored at ambient temperature for a certain time in order to obtain the optimum creaminess and eating properties.

A known material of this type is generally made up and packaged under sterile conditions.

It is an object of the present invention to provide an ice-cream dessert material of the type described above which can be used immediately after it has been removed from the freezer, and to this end the invention is characterized in that the ice-cream dessert material is whipped to an overrun of 150-350% with a gas bubble dimension D 3.2 < 25 µm, the stabilizers comprise at least carrageen, gelatine and xanthan gum, and the ice-cream dessert formed by freezing is scoopable.

In the present context, the term overrun is defined as the weight of a volume of unwhipped product minus the weight of the same volume of whipped product divided by the weight of the volume of whipped product times 100.

It has been found that whipping the composition to a high overrun and small gas bubbles, when using stabilizers which at least include carrageen, gelatine and xanthan gum, results in an ice-cream dessert which can be scooped immediately after it has been removed from the freezer and has an outstanding flavour development, mouthfeel and palatability.

It should be noted that the storage referred to in the preamble generally takes place at refrigerator temperature, i.e. temperatures of between 5 and 10°C, which are temperatures at which dairy products, a class to which the present ice-cream dessert material can also be assigned, are generally stored.

Another stability aspect of the ice-cream dessert material is that no serum separation and gelation occur during storage for 15 days at 5-10°C.

The gas bubble dimension D 3.2 < 25 µm which is associated with the high overrun is stable in the ice-cream dessert material according to the invention during storage for at least 15 days at the abovementioned temperature of 5 to 10°C.

The composition as described also contains mono/diglycerides, sodium caseinate or whey protein and lactose. These substances are generally added in the form of a commercially available mixture which contains the abovementioned substances in a fixed ratio.

The abovementioned stabilizers, namely carrageen, gelatine and xanthan gum, may if desired also be supplemented by other stabilizers, such as cellulose, carboxymethylcellulose and sodium orthophosphate in suitable quantities.

In addition to stabilizers, emulsifiers may also be present, and these may be selected, for example, from lactic acid esters of mono- and diglycerides, mono- and diacetyl tartaric acid esters of mono- and diglycerides, lecithin, polyoxyethylene-20-sorbitan monostearate and others. The overrun of the ice-cream dessert material is in particular 150 to 250°.

The ice-cream dessert material according to the invention has a water activity of 0.940-0.990; preferably 0.950-0.965 at 20°C.

The water activity aw is a value which, for a water-containing mixture, indicates how much water is freely available for processes such as freezing.

The aw is defined as the water vapour pressure of a product (in equilibrium in a closed space at constant temperature) divided by the water vapour pressure of pure water at the same temperature. It can be measured using an Aqualab instrument produced by Degacon, Pullman, US.

In the unwhipped state, the ice-cream dessert material has a viscosity of 0.5-3.2 Pa·s and preferably 1.0-1.5 Pa·s at 7°C. The measurement is carried out using an RFSII produced by Rheometrics Inc., USA, Piscataway. The measuring method also used parallel plates with a diameter of 50 mm, gap 2 mm, rate sweep 0.1-100 s-1. The above values were recorded at 10 s-1.

The general composition of the ice-cream dessert material according to the invention can be given as follows:
· 10-40% by weight of fat
· 20-40% by weight of sugar(s)
· 1-3% by weight of milk protein
· 0.2-0.5% by weight of stabilizers, and optionally
· 0.05-0.30% by weight of additional stabilizers and
· 0.50-1.25% by weight of emulsifiers, and
water to a total of 100%.

In the ice-cream dessert material mentioned above, the composition is advantageously:
· 15-25% by weight of fat
· 20-35% by weight of sugar(s)
· 2.0-2.8% by weight of milk protein
· 0.2-0.3% by weight of stabilizers, and optionally
· 0.10-0.25% by weight of additional stabilizers
· 0.75-1.05% by weight of emulsifiers, and
water to a total of 100%.

The ice-cream dessert material described above is supplied to the user in packaged form and the user can mix the ice-cream dessert material with a supplementary flavouring material before freezing it in, for example the freezer compartment of his refrigerator or in a freezer.

Obviously, numerous supplementary flavouring materials can be used. Mention may be made, for example, of chocolate, fruit, alcohol-containing beverage, cookie crumbs and many other materials. This property allows the user to make up an ice-cream dessert which is to his own taste by simply stirring the supplementary flavouring material which he has selected into the ice-cream dessert material and freezing the ice-cream dessert material which has been supplemented in this way.

The ice-cream dessert formed by freezing can be scooped at the temperature of freezing (for example 24 hours at -18°C) and can be consumed immediately, i.e. it does not have to stand at ambient temperature for a certain time.

In terms of its mouthfeel, perception of cold and flavour, the ice-cream dessert does not differ from conventionally prepared ice-cream.

In connection with the invention, reference is also made to US-A 4,552,773, which describes a composition which is similar to the present composition but in which, by selecting the stabilizers, it is endeavoured to create a substantially non-crystalline material which can be stored at -18°C for at least six months. The stabilizer used in the above publication preferably comprises carboxymethylcellulose and carrageen and possibly additional microcrystalline cellulose; the stabilizer composition in the present ice-cream dessert material comprises materials which allow microcrystals to form, and this has an influence on the flavour perception.

Without wishing to be tied to any scientific explanation, the Applicant assumes that by whipping the ice-cream dessert material according to the invention to an overrun of 150 to 350% with gas bubble dimensions D 3.2 < 25 µm, the quantity of liquid between the bubbles becomes so small that crystal formation takes place in the form of microcrystals which have a beneficial effect on the mouthfeel.

In connection with the invention, mention may also be made of EO-A 0 191 487, which describes a similar composition but in which a combination of gelatine and alginic acid, sodium alginate or mixtures thereof is present. This publication describes a material which, after it has been removed from the freezer, retains its dimensional stability even at ambient temperature, which may have something to do with the presence of relatively large quantities of gelatine and alginic acid/alginate.

WO 00/49883 likewise describes a composition of the type indicated above, which has an overrun of approximately 200% in the frozen state; however, the composition is probably not intended to be whipped, and the overrun is produced by freezing the material in a heat exchanger with a scraped surface. The above document also does not describe supplying a liquid product to the consumer who can convert the liquid product into an ice-cream dessert himself, if appropriate by admixing other materials.

The invention also relates to a method for preparing a liquid ice-cream dessert material which is stable during storage, wherein an oil-in-water emulsion is prepared, at least comprising water, milk protein, fat, flavourings and sweeteners, as well as one or more stabilizers, which ice-cream dessert material can be converted into an ice-cream dessert by freezing, characterized in that a base mixture is prepared by mixing milk with dry constituents which at least include sugar(s), stabilizer(s), emulsifier(s), milk protein and lactose, after which a liquid, foamable product which comprises an edible fat is added to the base mixture obtained in this way, and the entire preparation is then mixed followed by whipping to a desired overrun, and treatments required by the method selected from pasteurization, UHT treatment, sterilizing, homogenization, cooling/heating and mixing are carried out.

A UHT treatment is an ultra-heat treatment at approximately 140°C for a few seconds.

The method is expediently characterized in that a base mixture is made by mixing milk with dry constituents which include sugar(s), stabilizer(s), emulsifier(s), milk protein and lactose, and the mixture obtained is pasteurized, cooled to a first temperature, after which any desired flavours are added, followed by homogenization then cooling to around ambient temperature, after which a liquid, foamable product which comprises an edible fat is added to the base mixture obtained in this way, and the entire preparation is mixed followed by whipping to a desired overrun.

The starting point is the preparation of a base mixture, to which a liquid foamable product which comprises an edible fat is added, after which the entire batch is mixed, followed by whipping to a desired overrun.

A liquid foamable product is to be understood as meaning an oil-in-water emulsion which can be formed into a foam by whipping. More specifically, the oil-in-water emulsion comprises an emulsion in which at least an edible fat (or mixture thereof), water, an emulsifier (or emulsifier mixture) and if appropriate other constituents, such as stabilizers, protein, sugar, flavour and the like are present. The edible fat may be selected from vegetable, animal and milk fats. The fat is expediently a vegetable fat. In an advantageous embodiment, the whipped foamable product which comprises an edible fat is a whipping cream substitute, also known as "topping" or "cuisine whipping".

One example of a whipping cream substitute which contains vegetable fat is Menkomel®, which is marketed by the present Applicant and which in addition to water and vegetable fat also contains glucose syrup, sorbitol, buttermilk powder, sodium caseinate, emulsifiers, stabilizers, flavour, salt and colour.

Another material which can be used is marketed by Rich's Products Corporation, Buffalo, USA under the brand name RICH'S Master Blend. Rich's Masterblend consists of glucose syrup, hardened palm kernel oil, water, sugars, milk protein, hardened palm oil, emulsifiers, stabilizers, acidity regulator and salt.

The base mixture and liquid, foamable product are combined in a weight ratio of 1:1 to 4:1, while whipping takes place to an overrun of 150 to 350%, in particular 150 to 250%. The base mixture/liquid foamable product weight ratio is preferably 3:1.

The overrun is selected to provide a small average diameter of the gas bubbles whereby D3,2 < 25 µm. Such very small gas bubbles (D3,2 < 25 µm) are obtained by a high intensity of mixing during the aeration process. On the bulk level, these small gas bubbles are stabilised by the stabilisers (gelatine, carrageenan and xanthan gum). At the gas bubble surface level, they are stabilised by a network of agglomerated fat, which prevents the gas bubbles from growing in time. The stabilising properties of this network are believed to depend on the degree of churning out of the fat. The degree of churning out can be influenced by adjusting the mixing intensity during aeration, the amount of crystallised fat during aeration and the type of emulsifier(s) that are used.

The pasteurization described above in the method takes place at 85°C for 10 min, the first temperature to which the mixture is then cooled is 75°C, while the homogenization takes place at 150 bar and the temperature after homogenization is set to 10°C, and the liquid foamable product is added at a temperature of likewise 10°C.

The temperatures, time and homogenization pressure given above are given as specific values; it will be clear to the person skilled in the art that it is possible to deviate from these values and that a certain range is permitted without departing from the scope of the invention.

The base mixtures formed may vary in terms of their composition, and to this end a first base mixture consists of 75.6 parts of milk, standardized to 26.5% by weight of fat and 2.6% by weight of protein, to which 22 parts by weight of sugar(s), 0.3 part by weight of stabilizer mixture, 1.0 part of mono/diglyceride emulsifier, 0.6 part by weight of sodium caseinate or whey protein, 0.4 part by weight of lactose and 0.1 part by weight of flavouring are added.

A second base mixture consists of 62.5 parts by weight of milk, standardized to 32% by weight of fat and 3.2% by weight of protein, to which 35 parts by weight of sugar(s), 0.3 part by weight of stabilizer mixture, 1.0 part by weight of mono/diglyceride emulsifier, 0.6 part by weight of sodium caseinate or whey protein, 0.4 part by weight of lactose and 0.1 part by weight of flavouring are added.

The whipped ice-cream dessert material, after it has been formed, a process which takes place under sterile and/or hygienic conditions, will generally be packaged and stored under cooled conditions.

For packaging, consideration may be given to the known plastic tubs which are covered by a peelable aluminium closure. Obviously, it is also possible to use other sealed packaging means. Cool storage will take place under refrigerator conditions, i.e. at a temperature of 5 to 10°C; the shelf life of the ice-cream dessert material under these conditions is at least 15 days with the gas bubble dimension D 3.2 < 25 µm remaining stable.

The abovementioned D 3.2 is a mean value, and with regard to the meaning and method of calculation of a mean value of this nature, reference is made to Encyclopaedia of Emulsion Technology, Marcel Dekker, New York, USA, 1983, in particular Chapter VI.

The measurement is carried out as follows: a sample of 1 ml of the whipped ice-cream dessert material which is to be analysed is placed into a 10 ml vial. The sample is topped up with glycerol (> 99.5% purity) to 10 ml and mixed very carefully in order to ensure that no air is taken up.

One drop of glycerol/ice-cream dessert material is placed onto a specimen slide and covered with a covering glass. The layer thickness is approximately 200 µm; pressure on the covering glass must be avoided in order to prevent deformation of the gas bubbles.

The sample is examined under a stereomicroscope (magnification 10x) which is coupled to a digital camera (JVC KY-F 55 BE) which in turn is coupled to a computer with image analysis software from LEICA (LEICA QWIN standard V 2.3). Before the measurement commences, the system is calibrated using a specimen slide with a scale. The sample is then introduced into a microscope and the number and diameter of the gas bubbles are measured. The mean D 3.2 value given above is determined from this data.

The invention will now be described on the basis of an example which involved choosing from two base mixtures.

| Ingredients | Base mixture I | Base mixture II |
|---|---|---|
| Cream 40% fat | 50.00 | 50.00 |
| Skimmed milk | 25.51 | 12.51 |
| Sugar | 15.00 | 15.00 |
| C*dex 02001 | 7.00 | 20.00 |
| Satiagel DF 52 | 0.037 | 0.037 |
| Gelatine 240 | 0.16 | 0.16 |
| Keltrol RD | 0.11 | 0.11 |
| Excellion 453 | 2.06 | 2.06 |
| Vanilla flavouring | 0.12 | 0.12 |
| | 100.00 | 100.00 |
| C*dex 02001 is supplied by Cerestar of Brussels, BE, and consists of 91% by weight of dextrose and 9% of moisture. Satiagel DF 52 is supplied by Degussa Texturant Systems Benelux B.V. of Zaandam, NL and consists of kappa carrageen standardized to viscosity in milk by the addition of sugars. Gelatine 240 is supplied by Biogel AG of Lucerne, CH and contains gelatine with a bloom number of 240. Keltrol RD is supplied by CP Kelco of Paris, FR and consists of 100% by weight xanthan gum. Excellion 453 is supplied by DMV International of Veghel, NL and contains 49% by weight of E471 mono/diglycerides, 38% by weight of sodium caseinate/whey protein and 21% by weight of lactose. | | |

### Preparation of a base mixture:

The dry ingredients are weighed out, with the flavours kept separate.

The cream and skimmed milk are weighed out and the remaining dry ingredients apart from the flavours are added, followed by stirring for 15 minutes. The mixture obtained in this way is heated to 85°C and is held at this temperature for 10 min.

This is followed by cooling to 75°C, after which the flavours are added. There then follows homogenization at 150 bar, then cooling to 10°C in a water bath.

The required quantities of Menkomel® and RICH'S Master Blend are ready in the refrigerator at 7°C.

The following mixtures are made:
1. 800 grams of base mixture 1
2. 600 grams of base mixture 1 + 200 g of RICH'S Masterblend
3. 400 grams of base mixture 1 + 400 g of RICH'S Masterblend
4. 600 grams of base mixture 1 + 200 g of Menkomel®
5. 600 grams of base mixture 2 + 200 g of Menkomel®
6. 400 grams of base mixture 2 + 400 g of Menkomel®

With regard to the mixtures, the following should be noted with regard to the composition:
Base mixture I contains 24.9 g of sugars and 50.7 g of water per 100 g
Base mixture II contains 37.3 g of sugars and 38.9 g of water per 100 g
Menkomel® contains 4.2 g of sugars and 61.3 g of water per 100 g RICH'S Masterblend® contains approximately 37 g of sugars and approximately 37 g of water per 100 g.

Using this data to calculate the sugar and water contents of the above variants results in the following summary.

| **Var** | g of sugars per 800 g | g of water per 800 g | Sugars : water weight ratio |
|---|---|---|---|
| 1 | 199 | 406 | 1 : 2.0 |
| 2 | 223 | 378 | 1 : 1.7 |
| 3 | 248 | 351 | 1 : 1.4 |
| 4 | 158 | 127 | 1 : 0.8 |
| 5 | 232 | 356 | 1 : 1.5 |
| 6 | 166 | 400 | 1 : 2.4 |

In general, as will become apparent below, the sugar : water weight ratio will be selected in the range from 1:1 to 1:2, preferably in the range from 1:1.4 to 1:1.8.

All the mixtures were whipped to an overrun of 200% using a Hobart mixer.

The Hobart mixer used was of a type having a 3 1 mixing cup. The mixer was used at setting 2 which corresponds to a rotation speed of about 130 rpm.

The samples were introduced into tubs of approx. 150 ml; for each variant, two tubs were stored directly in the freezer in order to allow a gas bubble measurement to be carried out at time 0, while the remaining tubs were stored in a refrigerator at 7°C.

The gas bubble dimension distribution, hardness of the ice-cream after freezing for 24 h at -18°C, the water activity in the unwhipped state and the organoleptic properties were determined after 1, 2, 3, 4 weeks.

The hardness of the ice-cream dessert is measured after freezing at 24 hours at -18°C using a TA-XT2 produced by Stable Micro Systems, Surrey, UK.

A cylinder with a diameter of 12 mm and a height of 35 mm was pushed 20 mm into the dessert to be measured. The measuring speed is 5 mm/s; the hardness is expressed in grams.

The results of the tests carried out were as follows:

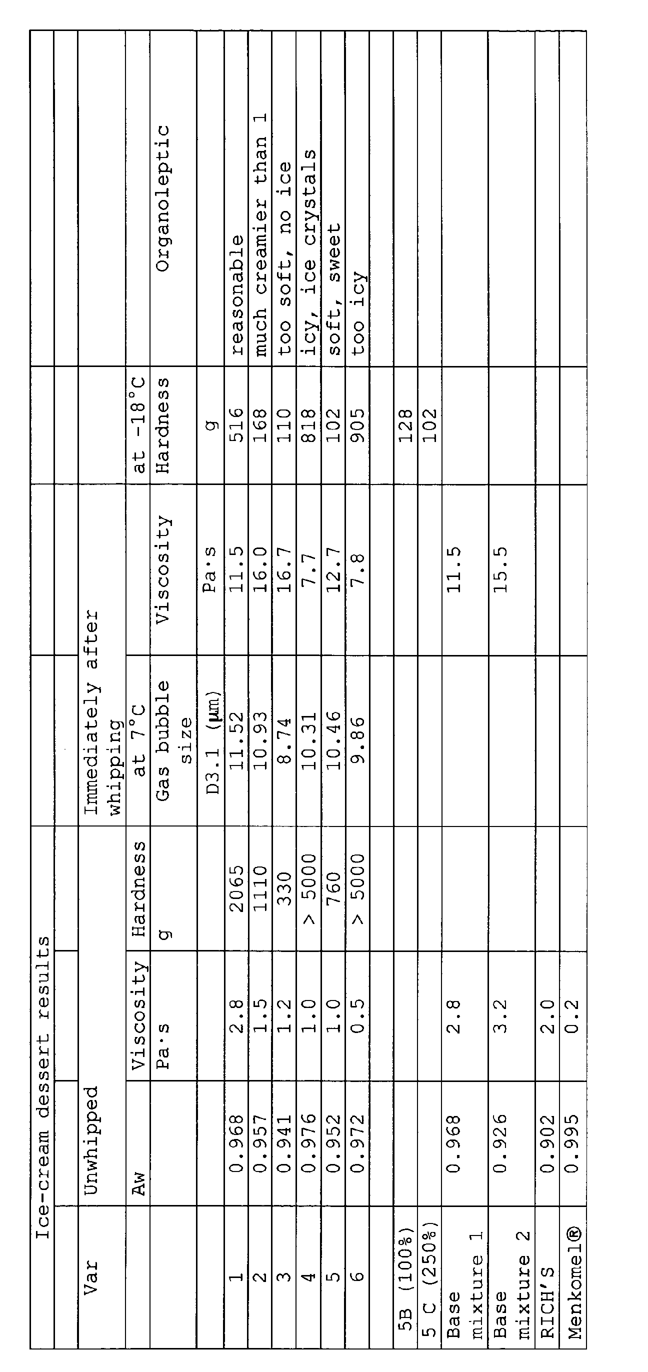

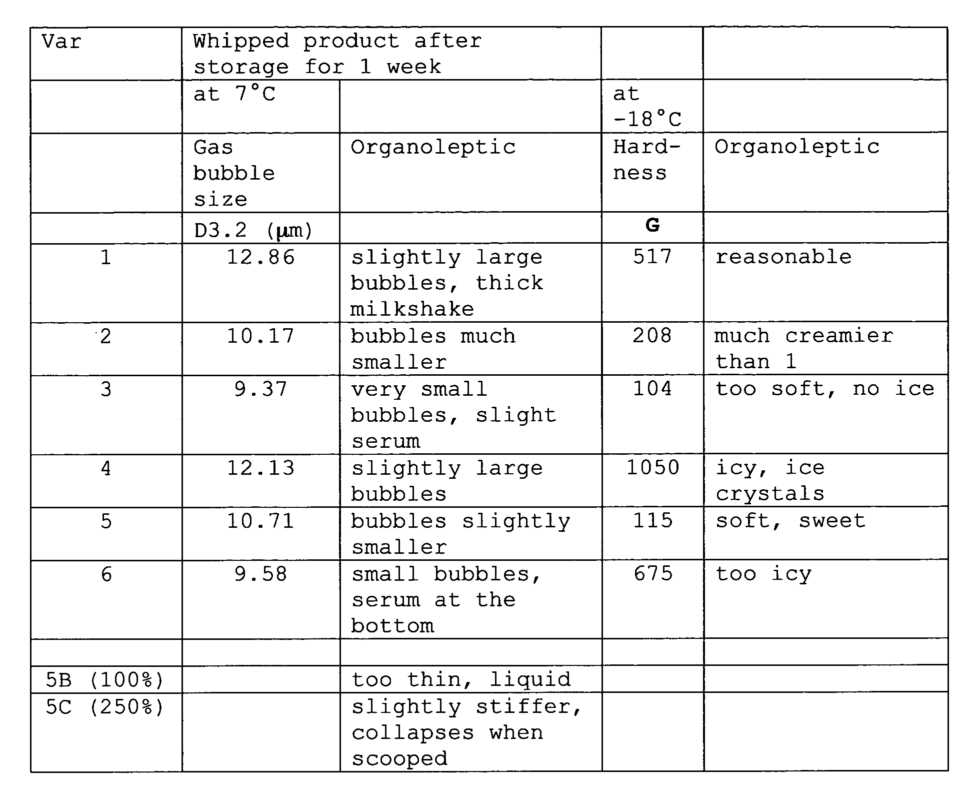

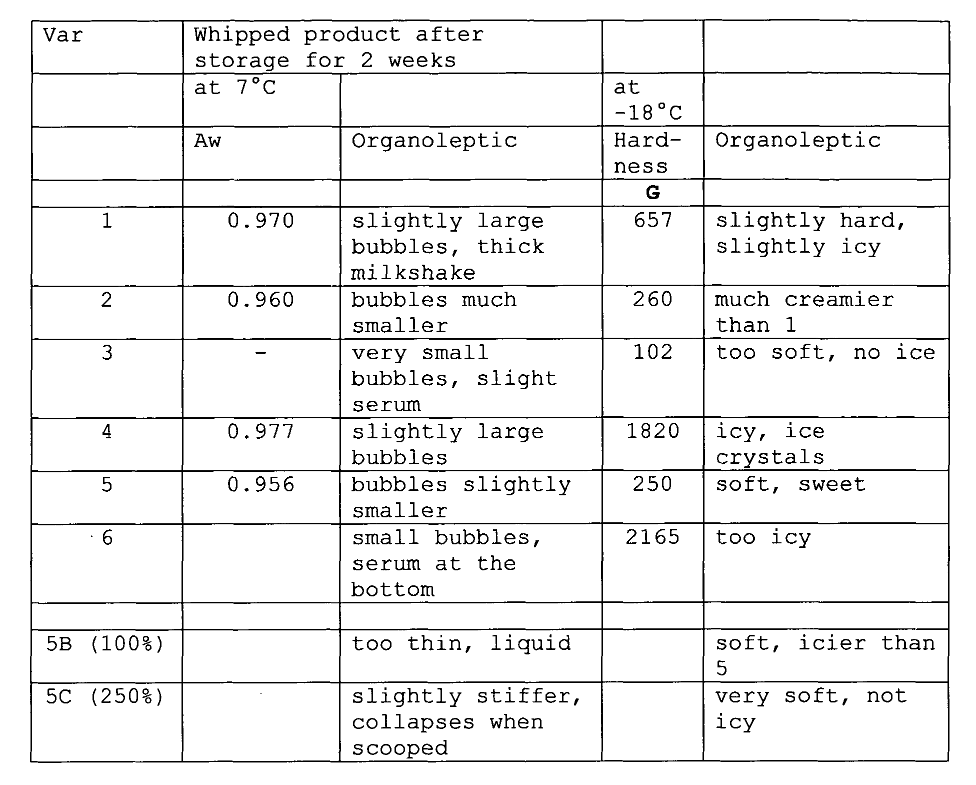

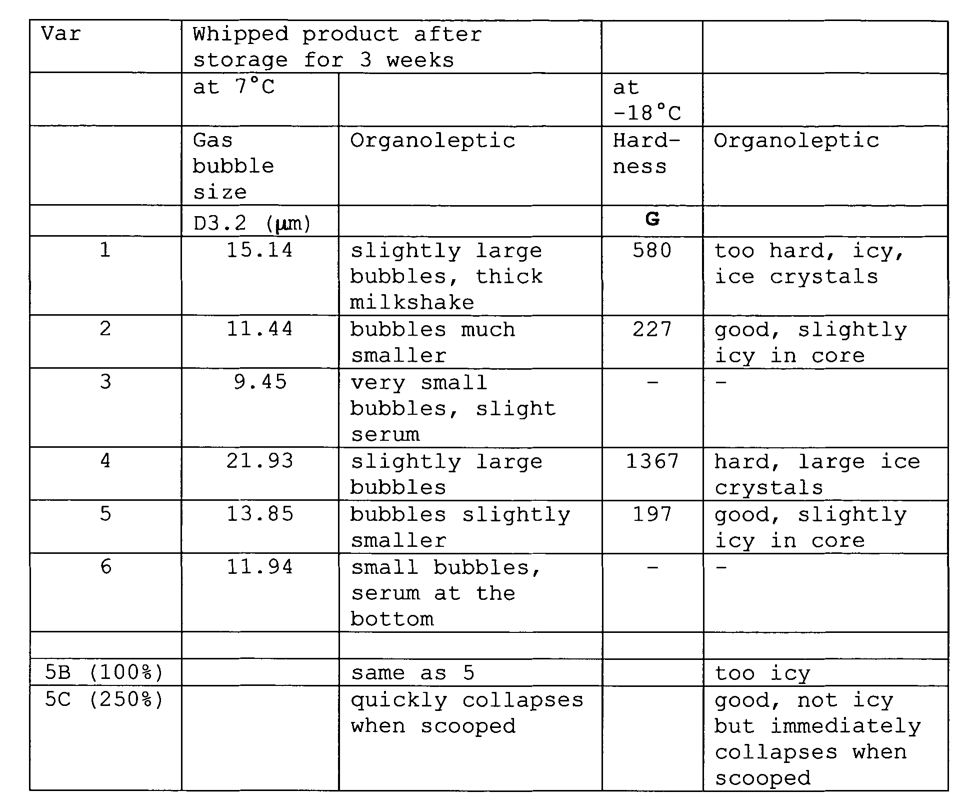

The results of the tests are discussed below. The base mixture on its own (Var 1) behaved reasonably, but the gas bubble size increases over the course of time when stored and the ice-cream dessert becomes relatively hard and icier.

Variant 2 is a good product with small gas bubbles.

Variant 3 is not thought of as ice-cream and serum separates out over the course of time.

Variant 4, in which a different liquid foamable product (Menkomel®) was added, is too hard, on account of a high aw value.

Variant 5 is a good product.

Variant 6 undergoes serum separation over the course of time and is too hard.

These tests demonstrate that variants 2 and 5, in which the base mixture to liquid foamable product weight ratio is 3:1, are optimum in terms of hardness and organoleptic properties.

The hardness of the ice-cream dessert is of crucial importance to the scoopability of the material.

The sugar : water ratio of variants 2 and 5 is 1:1.7 and 1:1.5, respectively, lying within the preferred range of 1:1.4 to 1:1.8 indicated above.

It has been found that slight deviations from the 3:1 ratio are permissible, and consequently 2.5:1 and 3.5:1 are also deemed to lie within the optimum range. Even a ratio of 2:1 still gives a reasonable product, while a ratio of 1:1 gives an end product which is not optimal for both liquid foamable products and base mixtures used.

Variant 5 was repeated with an overrun of 100 and 250% (variant 5B, 5C respectively). Variant 5B was relatively thin and liquid; variant 5C was slightly stiffer but collapses when scooped, partly on account of the high overrun.

The dessert of 5B was soft and gave a more icy impression than 5; variant 5C was very soft and not icy.

Research was carried out into a possible relationship between the water activity of the ice-cream dessert material and the hardness of the ice-cream formed therefrom.

It should also be noted that the water activity of the ice-cream dessert material is not changed or is only slightly changed by whipping to form a foamed product.

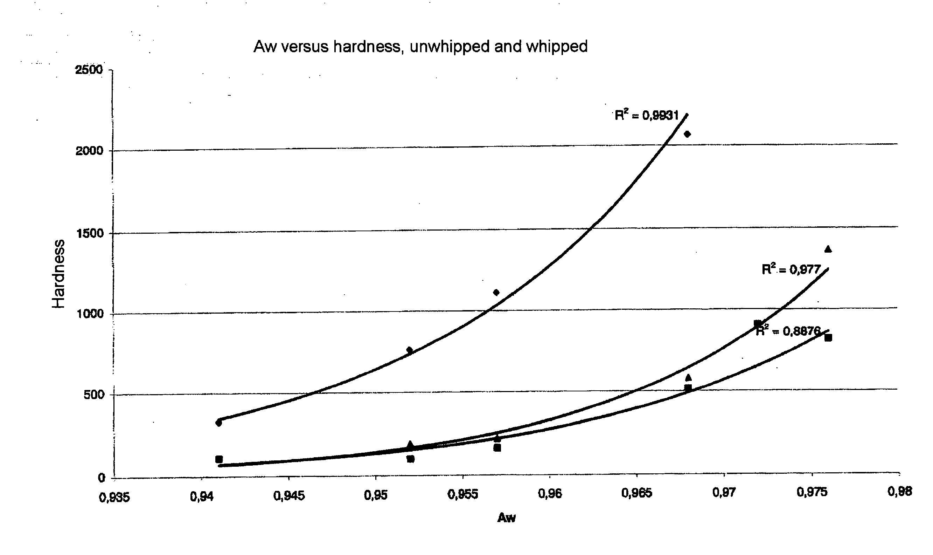

Figure 1 shows a graph illustrating the curve of the hardness in g of ice-cream which is formed for a varying water activity of the ice-cream dessert material in the whipped or unwhipped state.

The graph includes three lines.

The top line (◆) with correlation coefficient 0.9931 represents the relationship between hardness after freezing and Aw for unwhipped ice-cream dessert material.

The bottom line (■) with correlation coefficient 0.8876 represents the hardness/Aw relationship for whipped ice-cream dessert material.

The middle line (▲) with correlation coefficient 0.977 represents the hardness/Aw relationship for whipped ice-cream dessert material after storage for 3 weeks at 7°C in the refrigerator.

If the hardness of the ice-cream formed from unwhipped ice-cream dessert material is plotted against the water activity, a correlation of greater than 0.99 is obtained.

The hardness of ice-cream obtained from ice-cream dessert material in the whipped state gives a line with a correlation of greater than 0.88, while in the whipped state after storage for 3 weeks the correlation is almost 0.98.

It can be seen from the graph that the hardness of the ice-cream dessert is reduced by whipping the ice-cream dessert material, and that the ice-cream becomes somewhat harder as a result of prolonged storage of the ice-cream dessert material.

An increase in the water activity of the ice-cream dessert material leads to an increase in the hardness of the ice-cream dessert in the whipped and unwhipped states.

The relationship which has been found between the water activity of the ice-cream dessert material and the hardness of the ice-cream formed therefrom, given a constant overrun, allows the formation process of the ice-cream dessert material to be controlled successfully.

In any case, it will be clear that the aw in itself can be controlled by varying the liquid foamable product and base mixture.

The RICH product has a low aw of 0.902, while Menkomel® has an aw of 0.995. The aw of the ice-cream dessert material which is obtained by mixing base mixture 1 and RICH (var 2) is 0.957 with a soft ice-cream.

Mixing base mixture 1 and Menkomel® (var 4) gives a hard ice-cream; to compensate for this, it is possible to switch over to base mixture 2 and Menkomel® (var 5), so that the hardness drops back to an acceptable level.

In practice, the hardness value which is desired for the ice-cream dessert which is obtained will have to be between approximately 100 and 250 g and should correspond to an aw value of between 0.950 and 0.965.

## Claims

1. Ice-cream dessert material which is in liquid form, is stable during storage and has an oil-in-water emulsion character, comprising water, milk protein, fat, flavourings and sweeteners, as well as one or more stabilizers, which can be converted by freezing into an ice-cream dessert which comprises microcrystals, **characterized in that** the ice-cream dessert material is whipped to an overrun of 150-350% with a gas bubble dimension D 3.2 < 25 µm, the stabilizers comprise at least carrageen, gelatine and xanthan gum, and the ice-cream dessert formed by freezing is scoopable.

2. Ice-cream dessert material according to claim 1, **characterized in that** the gas bubble dimension D 3.2 < 25 µm is stable when stored for at least 15 days at 5-10°C.

3. Ice-cream dessert material according to one or more of claims 1-2, **characterized in that** it does not reveal any serum separation and gelation when stored for at least 15 days at 5-10°C,

4. Ice-cream dessert material according to claims 1-3, **characterized in that** mono/diglycerides, sodium caseinate or whey protein and lactose are also present.

5. Ice-cream dessert material according to one or more of claims 1-3, **characterized in that** additional stabilizers selected from cellulose, carboxymethylcellulose and sodium orthophosphate are present.

6. Ice-cream dessert material according to one or more of claims 1-3, **characterized in that** emulsifiers selected from lactic acid esters of mono- and diglycerides, mono- and diacetyl tartaric acid esters of mono- and diglycerides, lecithin, polyoxyethylene-20-sorbitan-monostearate are present.

7. Ice-cream dessert material according to one or more of claims 1-5, **characterized in that** it has a water activity at 20°C of 0.940-0.990.

8. Ice-cream dessert material according to claim 4, **characterized in that** it has a water activity at 20°C of 0.950-0.965.

9. Ice-cream dessert material according to one or more of claims 1-3, **characterized in that** in the unbeaten state at 7°C it has a viscosity of 0.5-3.2 Pa·s.

10. Ice-cream dessert material according to claim 6, **characterized in that** in the unbeaten state at 7°C it has a viscosity of 1.0-1.5 Pa·s.

11. Ice-cream dessert material according to one or more of claims 1-10, **characterized in that** the overrun is 150-250%.

12. Ice-cream dessert material according to one or more of claims 1-10, **characterized in that** it comprises:
. 10-40% by weight of fat
. 20-40% by weight of sugar(s)
. 1-3% by weight of milk protein
. 0.2-0.5% by weight of stabilizers, and optionally
. 0.05-0.30% by weight of additional stabilizers and
. 0.5-1.25% by weight of emulsifiers, and
water to a total of 100%.

13. Ice-cream dessert material according to claim 12, **characterized in that** it comprises:
. 15-25% by weight of fat
. 20-35% by weight of sugar(s)
. 2.0-2.8% by weight of milk protein
. 0.2-0.3% by weight of stabilizers, and optionally
. 0.10-0.25% by weight of additional stabilizers
. 0.75-1.05% by weight of emulsifiers, and
water to a total of 100%.

14. Ice-cream dessert material according to one or more of the preceding claims, **characterized in that** it can be mixed with a supplementary flavouring material by the user prior to freezing.

15. Ice-cream dessert material according to claim 14, **characterized in that** the supplementary flavouring material is selected from chocolate, fruit, alcoholic beverage, cookie crumbs and the like.

16. Method for preparing a liquid ice-cream dessert material which is stable during storage, wherein an oil-in-water emulsion is prepared, at least comprising water, milk protein, fat, flavourings and sweeteners, as well as one or more stabilizers, which ice-cream dessert material can be converted into an ice-cream dessert by freezing, **characterized in that** a base mixture is prepared by mixing milk with dry constituents which at least include sugar(s), stabilizer(s), emulsifier(s), milk protein and lactose, after which a liquid, foamable product which comprises an edible fat is added to the base mixture obtained in this way, and the entire preparation is then mixed followed by whipping to a desired overrun, and treatments required by the method selected from pasteurization, sterilizing, homogenization, cooling/heating and mixing are carried out.

17. Method according to claim 16, **characterized in that** a base mixture is made by mixing milk with dry constituents which include sugar(s), stabilizer(s), emulsifier(s), milk protein and lactose, and the mixture obtained is pasteurized, cooled to a first temperature, after which any desired flavours are added, followed by homogenization then cooling to around ambient temperature, after which a liquid, foamable product which comprises an edible fat is added to the base mixture obtained in this way, and the entire preparation is mixed followed by whipping to a desired overrun.

18. Method according to claim 16-17, **characterized in that** the base mixture and liquid foamable product are combined in a weight ratio of 1:1 to 4:1, and whipping is carried out to an overrun of 150-350%.

19. Method according to claim 18, **characterized in that** the base mixture and liquid foamable product are mixed in a weight ratio of 3:1.

20. Method according to claim 17, **characterized in that** the pasteurization takes place at 85°C for 10 min, the first temperature to which the mixture is cooled is 75°C, the homogenization takes place at 150 bar and the temperature after homogenization is set to 10°C while the liquid foamable product is added at a temperature of likewise 10°C.

21. Method according to one or more of the preceding claims 16-17, **characterized in that** a first base mixture consists of 75.6 parts of milk, standardized to 26.5% by weight of fat and 2.6% by weight of protein, to which 22 parts by weight of sugar(s), 0.3 parts by weight of stabilizer mixture, 1.0 part of mono/diglyceride emulsifier, 0.6 part by weight of sodium caseinate or whey protein, 0.4 part by weight of lactose, 0.1 part by weight of flavouring are added.

22. Method according to one or more of claims 16-17, **characterized in that** a second base mixture consists of 62.5 parts by weight of milk, standardized to 32% by weight of fat and 3.2% by weight of protein, to which 35 parts by weight of sugar(s), 0.3 part by weight of stabilizer mixture, 1.0 part by weight of mono/diglyceride emulsifier, 0.6 part by weight of sodium caseinate or whey protein, 0.4 part by weight of lactose and 0.1 part by weight of flavouring are added.

23. Method according to one or more of the preceding claims, **characterized in that** the whipped ice-cream dessert material is packaged and stored under cooled conditions.
